# EUROPÄISCHE PATENTSCHRIFT

(11) **EP 3 946 791 B1**
(45) Veröffentlichungstag und Bekanntmachung des Hinweises auf die Patenterteilung: **18.06.2025**
(21) Anmeldenummer: 20714522.8
(22) Anmeldetag: 24.03.2020
(51) Int. Cl.: B23D 51/20, B23D 51/16

(54) **SÄBELSÄGE**
SABER SAW
SCIE SABRE

(30) Priorität: 26.03.2019 DE 102019204097
(43) Veröffentlichungstag der Anmeldung: 09.02.2022
(73) Patentinhaber: Robert Bosch GmbH, 70442 Stuttgart (DE)
(72) Erfinder: KOCSIS, Zoltan, 3521 Miskolc (HU)
(86) Internationale Anmeldenummer: PCT/EP2020/058077
(87) Internationale Veröffentlichungsnummer: WO 2020/193508

(56) Entgegenhaltungen:
- EP-A1- 2 842 675
- US-A- 1 948 109
- US-A- 2 330 618
- US-A- 2 705 980
- US-A- 5 077 902

## Beschreibung

Die vorliegende Erfindung betrifft eine Säbelsäge umfassend einen Bewegungswandler zur Umwandlung einer Drehbewegung der Abtriebswelle eines Antriebsmotors.

### Stand der Technik

Handwerkzeugmaschinen, insbesondere Säbelsägen der vorstehend beschriebenen Art sind allgemein bekannt und werden, je nach Auswahl und Beschaffenheit des Sägeblatts, zum Schneiden diverser Objekte verwendet, die aus einer Vielzahl an Materialien hergestellt sind, etwa Metall, Holz, oder Gips. Aufgrund der erhältlichen kabellosen, akkugetriebenen Ausführungen ermöglichen solche Säbelsägen das Schneiden in beengten Räumen oder unter ungewöhnlichen Winkeln, wie es beispielsweise beim Verlegen von Heizungs-, Lüftungs- und Klimatisierungsrohren, oder Elektroleitungen erforderlich ist.

Der Antrieb der Säbelsägen erfolgt oftmals mit einem Antriebsmotor und mit einem Bewegungswandler zur Umwandlung der Drehbewegung der Abtriebswelle des Antriebsmotors in eine Hubbewegung, um das Sägeblatt hin und her zu bewegen. Zu diesem Zweck wurden grundsätzlich verschiedene Ansätze entwickelt. Bekannte Varianten dieser Bewegungsumwandelvorrichtungen umfassen zum Beispiel Kurbelschleifen, ein Schubkurbelgetriebe, Exzenterantriebe oder.

Bei einem typischen Taumelscheibenantrieb etwa besitzt der Antriebsarm einer primären Taumelscheibe eine sphärische Spitze, die in eine passende Bohrung in der dann hin- und hergehend angetriebenen Spindel eingreift.

Ein Exzenterantrieb wird beispielsweise in der EP2842675A1 offenbart. Dabei erfolgt der Antrieb durch einen Antriebsmotor, der über ein Getriebe einen Exzenter antreibt. Auf diesem läuft eine Pleuelstange, die die Drehbewegung des Antriebsmotors über eine zweite Pleuelstange in eine Schubbewegung des angeschlossenen Sägeblatts umsetzt. Zur Unterdrückung von Vibrationen offenbart dieses Dokument ferner eine Gegengewichtsvorrichtung zur Verwendung in einer Säbelsäge mit einem Antrieb, einer Hubstange und wenigstens einem ersten Gelenkstab.

Bei den aus dem Stand der Technik bekannten Handwerkzeugmaschinen, insbesondere bei den Säbelsägen, beispielsweise EP2842675A1 oder US2705980A erweist es sich als nachteilig, dass sie bauartbedingt oftmals ein nicht zu unterschätzendes Eigengewicht haben und dadurch nicht dem Konzept der einfachen Handhabbarkeit in beengten Verhältnissen entsprechen. Ferner erweist sich zumeist der Aufbau des Bewegungswandlers im Stand der Technik als kompliziert, wenig robust, und/oder kostenintensiv. Solche Bewegungswandler sind beispielsweise aus US5077902A, US2330618A oder US1948109A aus unterschiedlichen Einsatzzwecken bekannt.

### Offenbarung der Erfindung

Es ist Aufgabe der Erfindung, die oben genannten Nachteile zu verbessern und eine Säbelsäge umfassend einen Bewegungswandler zur Umwandlung einer Drehbewegung der Abtriebswelle eines Antriebsmotors, bereitzustellen, durch welche die Arbeitsleistung erhöht wird, und wobei eine einfache, effektive, kostengünstige und/oder energieeffiziente Umwandlung einer Drehbewegung in eine Hubbewegung bereitgestellt werden kann.

Diese Aufgabe wird durch eine Säbelsäge gemäß Anspruch 1, umfassend einen Bewegungswandler zur Umwandlung einer Drehbewegung der Abtriebswelle eines Antriebsmotors, gelöst. Vorteilhafte Ausgestaltungen, Varianten und Weiterbildungen der Erfindung sind den Unteransprüchen zu entnehmen.

Eine erfindungsgemäße Säbelsäge, weist ein Gehäuse, einen Antriebsmotor mit einer Abtriebswelle, eine Spindel zur Aufnahme eines Werkzeugs, insbesondere eines Sägeblattes, und einen Bewegungswandler zur Umwandlung einer Drehbewegung der Abtriebswelle in eine Hin-und Herbewegung der Spindel auf. Der Bewegungswandler umfasst ein von der Abtriebswelle rotatorisch um eine Drehachse angetriebenes Exzenterelement mit einem exzentrisch zur Drehachse angeordneten Mitnehmerteil, und ein Pendelelement, welches schwenkbar um einen Lagerpunkt gelagert und über einen Koppelpunkt mit der Spindel verbunden ist.

Erfindungsgemäß ist vorgesehen, dass das Pendelelement ein Führungselement zur Führung des Mitnehmerteils aufweist. Dabei ist das Führungselement zwischen dem Lagerpunkt und dem Koppelpunkt angeordnet.

Erfindungsgemäß definieren der Lagerpunkt und der Koppelpunkt ferner eine erste Achse des Pendelelements; wobei das Führungselement eine entlang der ersten Achse des Pendelelements gerichtete Bewegungskomponente des Mitnehmerteils relativ zu dem Pendelelement zulässt und eine senkrecht zu der ersten Achse des Pendelelements gerichtete Bewegungskomponente des Mitnehmerteils relativ zu dem Pendelelement weitestgehend verhindert.

Ferner weist das Pendelelement zwischen dem ersten Ende und dem zweiten Ende ein Führungselement zur Führung des Mitnehmerteils auf. Erfindungsgemäß ist vorgesehen, dass das Führungselement eine entlang der Längsachse des Pendelelements gerichtete Bewegungskomponente des Mitnehmerteils relativ zu dem Pendelelement zulässt und eine senkrecht zu der Längsachse des Pendelelements gerichtete Bewegungskomponente des Mitnehmerteils relativ zu dem Pendelelement weitestgehend verhindert.

Das Pendelelement weist ein erstes Ende und ein zweites Ende auf, wobei das erste Ende über den Lagerpunkt vorteilhafterweise innerhalb des Gehäuses gelagert ist und das zweite Ende über den Koppelpunkt mit der Spindel verbundenen ist.

In einer bevorzugten Ausführungsform definiert das erste Ende und das zweite Ende eine Längsachse des Pendelelements.

Vorteilhafterweise ist die Spindel zumindest teilweise in dem Gehäuse gelagerte, wobei die Drehbewegung der Abtriebswelle in eine Hin-und Herbewegung der Spindel relativ zum Gehäuse umgewandelt wird Auf diese Weise kann eine effektive und progressive Schneidleistung der Säbelsäge erreicht werden, wobei es sich um eine relativ eine einfache und robuste Konstruktion handelt, die kostengünstig herstellbar ist. Durch die erfindungsgemäße Kinematik, die durch die Anordnung des Pendelelements in Verbindung mit dem Mitnehmerteil und der Spindel erreicht wird, wird zudem erreicht, dass die Spindel unterschiedliche Geschwindigkeiten bei der Vor- und Zurückbewegung hat, was einen schnellen und energieeffizienten Sägefortschritt ermöglicht.

In einer besonders vorteilhaften Ausführungsform bildet das Führungselement in dem Pendelelement eine Aufnahme aus, in welche das Mitnehmerteil eingreift. Diese Konstruktion ist wiederum durch eine hohe Robustheit gekennzeichnet.

Dabei kann vorgesehen sein, dass die Aufnahme ein Langloch ausbildet, wobei das Langloch entlang der Längsachse des Pendelelements ausgerichtet ist.

Vorteilhafterweise ist das Exzenterelement eine Exzenterscheibe, wobei das Mitnehmerteil ein auf dem Exzenterelement angeordneter Zylinder.

Ferner ist es von Vorteil, wenn das Mitnehmerteil mit einem Ringlager in dem Führungselement gelagert ist. Hierdurch wird die Reibung zwischen dem Mitnehmerteil und dem Führungselement verringert, was sich wiederum vorteilhaft durch reduzierten Verschleiß der Teile und Laufruhe auswirkt.

In einer bevorzugten Ausführungsform sind ein erster Abstand des Führungselements zum Lagerpunkt und ein zweiter Abstand des Koppelpunkts zum Lagerpunkt derart aufeinander abgestimmt, dass die Hin- und Herbewegung des Pendelelements am Führungselement eine erste Amplitude aufweist und am Koppelpunkt eine zweite Amplitude, wobei ein Amplitudenverhältnis der zweiten Amplitude zur ersten Amplitude einen Wert ungleich 1 hat.

Vorteilhafterweise hat das Amplitudenverhältnis (R) einen Wert R>1, insbesondere einen Wert R>1.5, besonders bevorzugt einen Wert R>2.

In einer vorteilhaften Ausgestaltung hat der Lagerpunkt der Lagerpunkt in jeder Stellung der Spindel zumindest einen Abstand Δ senkrecht zu einer Längsachse der Spindel, wobei der Abstand Δ einen festgelegten Wert größer Null hat.

Vorteilhafterweise liegt die Drehachse senkrecht zur Abtriebswelle und das Exzenterelement wird über einen Schneckentrieb von der Abtriebswelle angetrieben.

Bevorzugterweise ist die Spindel mittels eines Nadellagers an dem Gehäuse gelagert. Hierdurch kann die Kinematik der Spindelbewegung beeinflusst werden, insbesondere kann die Bewegung der Spindel und letztlich des Sägeblattes entlang einer bogenförmigen Bahn gesteuert werden.

In einer weiteren Ausführungsform verhindert das Nadellager eine quer zu einer Längsachse der Spindel gerichtete Bewegungskomponente der Spindel relativ zum Gehäuse.

Vorteilhafterweise ist ein dritter Abstand zwischen dem Nadellager und dem Koppelpunkt entlang der ersten Achse der Spindel so gewählt, dass die Hin- und Herbewegung der Spindel von einer Kippbewegung der Längsachse der Spindel um das Nadellager überlagert wird, sodass sich eine Orbitalbewegung des Werkzeugs, an der Spitze des Werkzeugs, einstellt. Die Orbitalbewegung bewirkt einen schnellen und hochgradig effizienten Sägevorgang mit hoher Schneidleistung.

Vorteilhafterweise ist an dem Mitnehmerteil ein exzentrisches Gegengewicht zur Kompensation einer Unwucht des Exzenterelements angeordnet. Hierdurch arbeitet die Säbelsäge besonders vibrationsarm.

Es hat sich als Vorteil herausgestellt, dass die Säbelsäge eine kabelgebundene, mit einem elektrischen Antriebsmotor ausgestattete, oder eine kabellose, mit einem akkubetriebenen elektrischen Antriebsmotor oder einem Verbrennungs-Antriebsmotor ausgestattete Säbelsäge ist.

Weitere Merkmale, Anwendungsmöglichkeiten und Vorteile der Erfindung ergeben sich aus der nachfolgenden Beschreibung der Ausführungsbeispiele der Erfindung, welche in der Zeichnung dargestellt sind. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung nur einen beschreibenden Charakter haben und nicht dazu gedacht sind, die Erfindung in irgendeiner Form einzuschränken.

### Zeichnungen

Nachfolgend wird die Erfindung anhand von in den Zeichnungen dargestellten Ausführungsbeispielen näher erläutert. Es zeigen:
- Fig. 1: eine schematische Seitenansicht einer erfindungsgemäßen Säbelsäge mit einem Bewegungswandler;
- Fig. 2: eine schematische Seitenansicht des Bewegungswandlers aus Figur 1 im Abschnitt A;
- Fig. 3: eine erste schematisch perspektivische Seitenansicht des Bewegungswandlers aus Figur 1 im Abschnitt A;
- Fig. 4: eine zweite schematisch perspektivische Seitenansicht des Bewegungswandlers aus Figur 1 im Abschnitt A; und
- Fig. 5: ein schematischer Teilausschnitt des Bewegungswandlers aus Fig. 1;
- Fig. 6: eine schematische Darstellung einer Kinematik des Bewegungswandlers in einer Säbelsäge;
- Fig. 7: eine Bahnkurve einer Spitze eines Werkzeuges im Zusammenhang mit der in Figur 6 dargestellten Kinematik; und
- Fig. 8: eine schematische Darstellung eines Geschwindigkeitsverlaufs einer Spitze eines Werkzeuges montiert auf einer erfindungsgemäßen Säbelsäge.

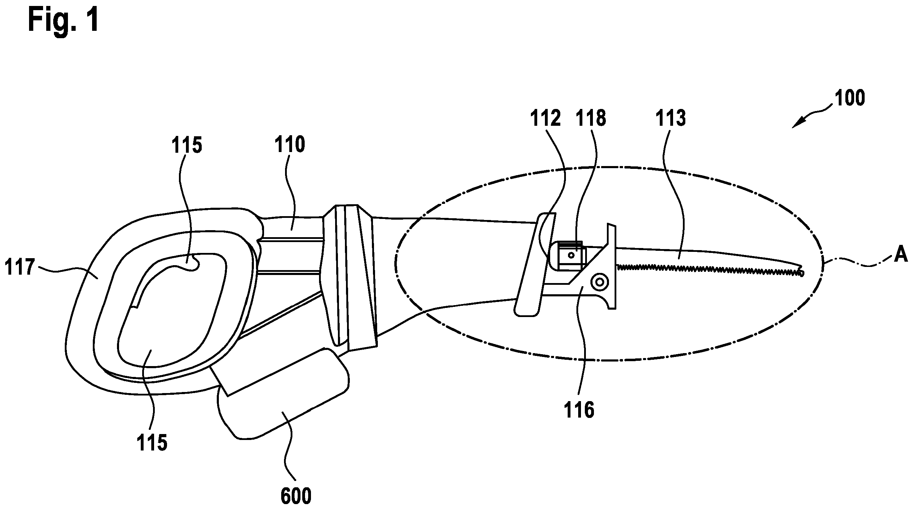

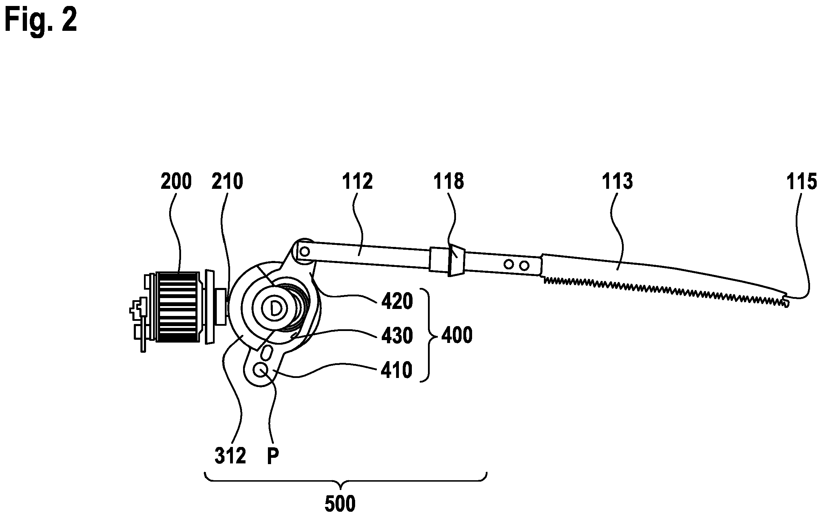

Die Figur 1 stellt eine Seitenansicht einer erfindungsgemäßen akkubetriebenen Säbelsäge 100, die beispielhaft als Säbelsäge 100 ausgebildet ist, dar. Figur 2 zeigt einige der innerhalb eines Gehäuses 110 der Handwerkzeugmaschine angeordneten Komponenten.

Zu diesen Komponenten zählt unter anderem ein elektrischer Antriebsmotor 200 mit Abtriebswelle 210 sowie eine zumindest teilweise in dem Gehäuse 110 gelagerte Spindel 112 zur Aufnahme eines Werkzeugs 114 auf. Die Spindel 112 ragt in der gezeigten Ausführungsform im Bereich eines Werkstückanschlags 116 aus dem Gehäuse 112. Ferner ist innerhalb der Handwerkzeugmaschine 100 ein Bewegungswandler 500 zur Umwandlung einer Drehbewegung der Abtriebswelle 210 in eine Hin- und Herbewegung der Spindel 112 relativ zum Gehäuse 110 angeordnet. Die Spindel 112 ist somit beweglich an dem Gehäuse 110 befestigt und antriebsmäßig mit dem elektrischen Antriebsmotor 200 gekoppelt. Das Werkzeug 114, das beispielsweise wie dargestellt als Sägeblatt ausgebildet ist, ist an einem ersten Ende der Spindel 112 angebracht. Das zweite Ende der Spindel 112 befindet sich in der gezeigten Ausführungsform in jeder Position innerhalb des Gehäuses 110 und ist mit einem in Zusammenhang mit den Figuren 2 bis 5 näher beschriebenen Pendelelement 400 verbunden.

Das Gehäuse 110 weist einen ersten Handgriff 117 auf, der die Form eines geschlossenen Bügels hat und eine Öffnung 115 ausbildet, so dass ein Benutzer den Handgriff 117 besser mit den Fingern umschließen kann. Ferner weist das Gehäuse 110 einen Akkupack 600 und im oberen Bereich des Handgriffs 117 ein Bedienelement 119 zur Steuerung des Antriebsmotors auf.

Wie in den Figuren 2 bis 5 im Detail dargestellt, weist ein Bewegungswandler 500 ein von der Abtriebswelle 210 rotatorisch um eine Drehachse 220 angetriebenes Exzenterelement 300 mit einem exzentrisch zur Drehachse 220 angeordneten Mitnehmerteil 310 auf.

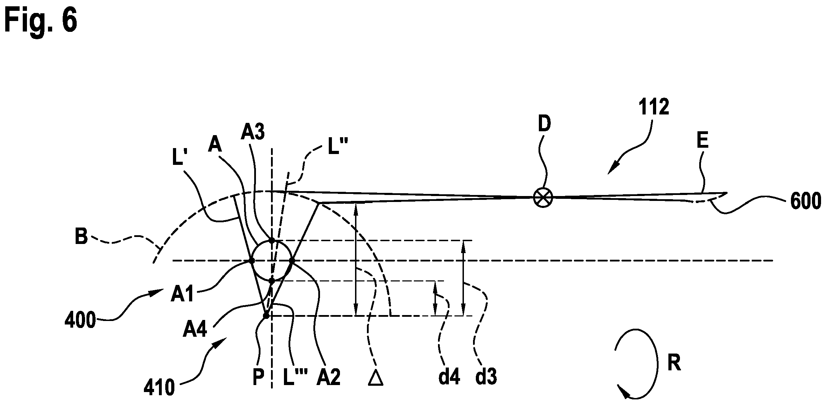

Ferner weist der Bewegungswandler 500 ein Pendelelement 400 mit ersten Ende 410 und einem zweiten Ende 420 auf. Das erste Ende 410 ist innerhalb des Gehäuses 110 schwenkbar an einem Lagerpunkt P gelagert und das zweite Ende 420 ist mit der Spindel 112 verbunden. Auf diese Weise kann das Pendelelement 400 eine Pendel- oder Schaukelbewegung um den Lagerpunkt P ausführen. Die Spindel 112 ist mittels eines Nadellagers 118 in einem in Figur 6 gezeigten Punkt D an dem Gehäuse 110 gelagert, so dass an diesem Punkt D eine quer zu einer Längsachse der Spindel 112 gerichtete Bewegungskomponente der Spindel 112 relativ zum Gehäuse 110 verhindert wird. Der Lagerpunkt P in jeder Stellung der Spindel 112 zumindest einen Abstand Δ>0 senkrecht zu einer Längsachse der Spindel 112.

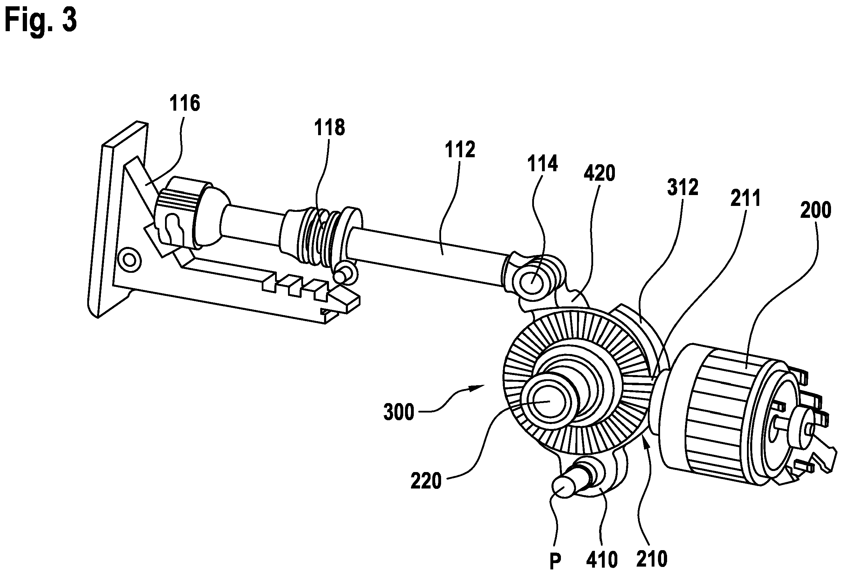

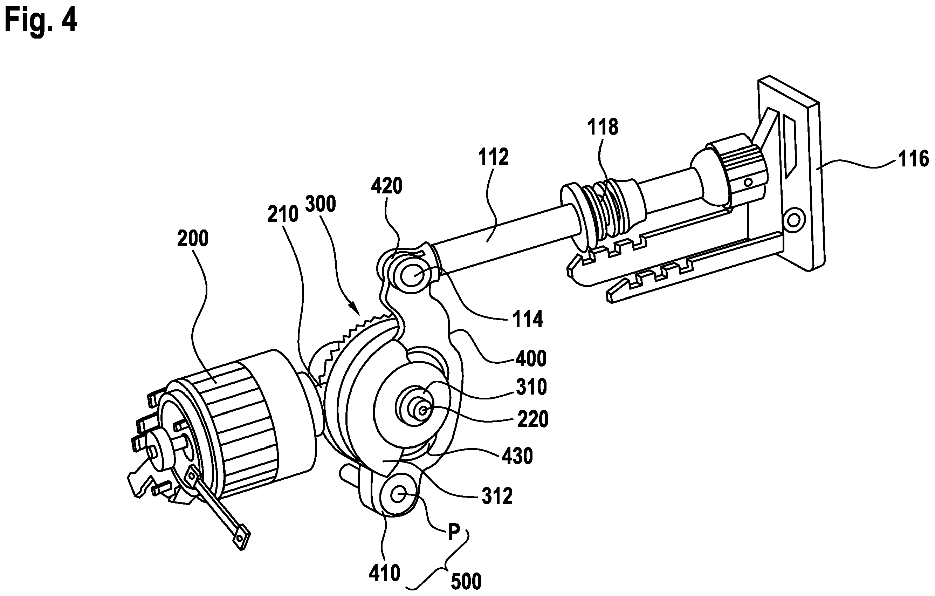

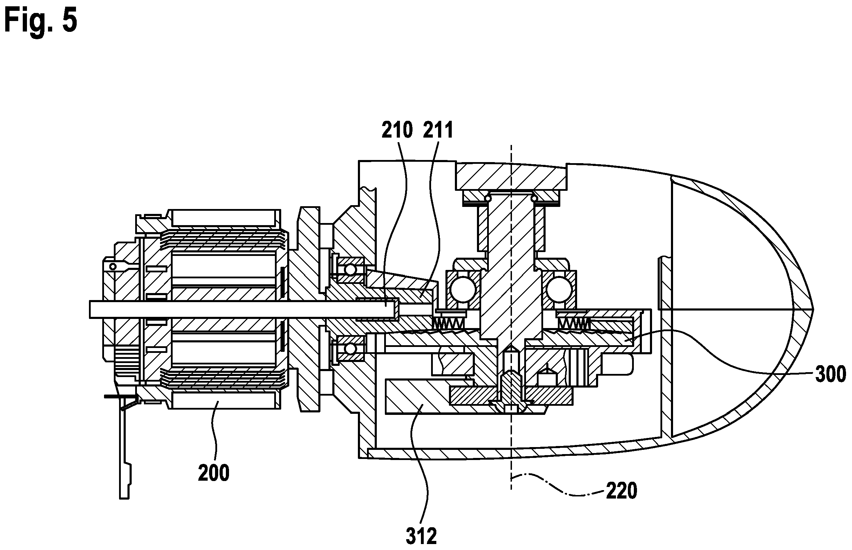

Wie in den Figuren 3 und 4 erkennbar, liegt die Drehachse 220 in der gezeigten Ausführungsform senkrecht zur Abtriebswelle 210. Das Exzenterelement 300 wird daher in dieser Ausführungsform über einen Schneckentrieb von der Abtriebswelle 210 angetrieben, wobei in der gezeigten Ausführungsform ein Schneckenrad 211 auf der Abtriebswelle sitzt, was in Figur 5 gezeigt ist.

Das erste Ende 410 und das zweite Ende 420 des Pendelelements definieren eine Längsachse L des Pendelelements 400, wobei das Pendelelement 400 zwischen dem ersten Ende 410 und dem zweiten Ende 420 ein Führungselement 430 aufweist.

Das Führungselement 430 hat in der dargestellten Ausführungsform eine elliptische Aufnahme, die mit einem exzentrisch zur Drehachse 220 angeordneten Mitnehmerteil 310 des Exzenterelements 300 in Eingriff steht.

Das Exzenterelement 300 ist in der gezeigten Ausführungsform eine Exzenterscheibe, die das als Zylinder ausgebildete Mitnehmerteil 310 trägt. Zur Verringerung der Reibung zwischen Mitnehmerteil 310 und Führungselement 430 ist zwischen den beiden Bauteilen ein Ringlager 314 angeordnet.

Zur Verringerung von Vibrationen im Betrieb ist an dem Mitnehmerteil 310 ein exzentrisches Gegengewicht 312 zur Kompensation der Unwucht des Exzenterelements 300 angeordnet.

Figur 6 zeigt eine schematische Darstellung der Kinematik des Bewegungswandlers 500. Das Pendelelement 400 ist durch seine Längsachse L in den unterschiedlichen Positionen L', L" und L‴ dargestellt. Bedingt durch die Lagerung des ersten Endes 410 im Lagerpunkt P schneiden sich die Darstellungen L', L" und L‴ der Längsachse L in Punkt P. Das zweite Ende 420 des Pendelelements 400 ist mit der Spindel 112 verbunden, welche wiederum in Punkt D über das Nadellager 114 in Querrichtung an dem Gehäuse gelagert ist.

Die Bahn eines Mittelpunktes des Mitnehmerteils 310 ist in Figur 6 durch den Kreis A dargestellt. Da in der gezeigten Ausführungsform der Mittelpunkt des Mitnehmerteils 310 stets auf der Längsachse L des Pendelelements 400 liegt, entspricht eine Position des Mittelpunkts des Mitnehmerteils 310 bei A1 einer Lage der Längsachse bei L'. In der Figur 6 ist dies die Stellung, bei welcher die Spindel 112 maximal in dem Gehäuse eingezogen ist. Entsprechend entspricht eine Position des Mittelpunkts des Mitnehmerteils 310 bei A2 einer Lage der Längsachse bei L‴. Dies ist wiederum die Stellung, bei welcher die Spindel 112 maximal aus dem Gehäuse hervorsteht. A1 und A2 entsprechen den Umkehrpunkten der Spindel 112 in ihrer Hubbewegung entlang ihrer Längsachse.

Bei einer Rotation des Mittelpunkts des Mitnehmerteils 310 entlang der Kreisbahn A im Uhrzeigersinn, dargestellt durch den Pfeil R, nimmt ein Abstand dieses Mittelpunkts zum Lagerpunkt P zyklisch zu und ab. Dieser Abstand hat in Punkt A3 den Maximalwert d3 und in Punkt A4 den Minimalwert d4. Bei konstanter Umdrehungsgeschwindigkeit des Antriebsmotors 200 bedeutet dies, dass die Pendelbewegung des Pendelelements 400 von der Lage L‴ zu L' schneller abläuft als diejenige von der Lage L' zu L‴. Dies kann als asymmetrische Schneidbewegung bezeichnet werden. Entsprechend ist die Hubbewegung der Spindel 112 in Richtung in das Gehäuse 112 hinein schneller als die entgegengesetzte Bewegung aus dem Gehäuse 112 heraus. Bei Anordnung der Zähne auf dem Sägeblatt 114 derart, dass sie auf Zug schneiden, das heißt bei der Bewegung der Spindel in Richtung in das Gehäuse hinein, bedeutet dies, dass die Schneidbewegung mit größerer Energie ausgeführt wird als die Hubbewegung aus dem Gehäuse heraus. Hierdurch wird eine hohe Effizienz des Schneidvorganges erreicht.

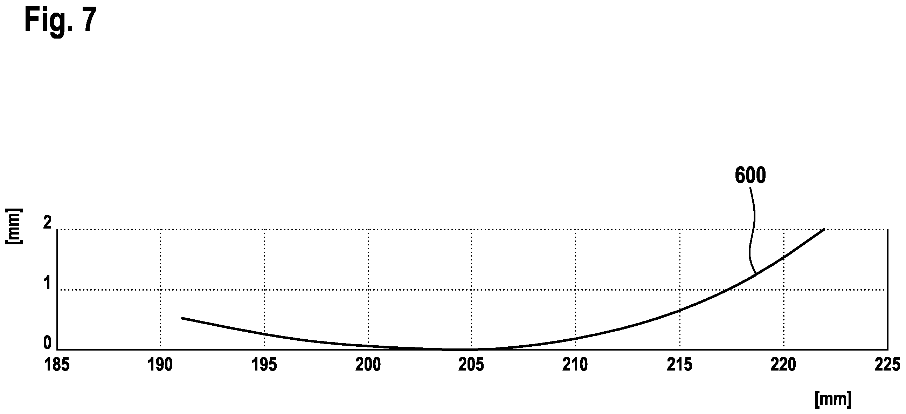

Es ist Figur 6 ferner zu entnehmen, dass die Kinematik ein Kippen der Längsachse der Spindel 112 um den nadelgelagerten Punkt D zur Folge hat, welche die Hubbewegung der Spindel 112 überlagert. Dies führt dazu, dass ein Punkt E am entfernt von dem Pendelelement 400 liegenden Ende der Spindel 112 eine Bewegung entlang der Bahn 600 ausführt, die in Figur 7 vergrößert dargestellt ist. Diese Art der Bewegung, die sich auch auf das Sägeblatt 114 überträgt, kann als Orbitalbewegung bezeichnet werden und bewirkt einen schnellen und hochgradig effizienten Sägevorgang mit hoher Schneidleistung.

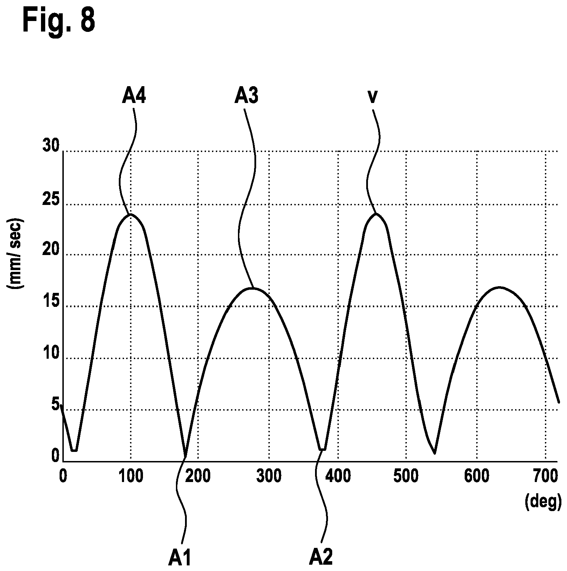

Die anhand der Figur 6 erläuterten Zusammenhänge sind nochmals in Figur 8 verdeutlicht. Figur 8 zeigt ein Diagramm, welches den Betrag der Bahngeschwindigkeit am in Figur 6 dargestellten Punkt E über dem vom Pendelelement 400 überstrichenen Winkel (als betragsmäßige Summe) in Form einer Kurve v wiedergibt.

Aufgrund der Hin- und Herbewegung der Spindel 112 hat die Kurve v einen zyklischen Verlauf. Da die Bahngeschwindigkeit des Punktes E letztendlich auf die Kreisbewegung des Mitnehmerteils 310 zurückgeht, die sich durch einen variablen Hebelarm auf das Pendelelement 400 und dadurch auf die Spindel 112 überträgt, hat die Kurve v abschnittsweise einen Verlauf, der näherungsweise sinusoidal genannt werden kann.

Die in Figur 8 gekennzeichneten Punkte A1, A2, A3, und A4 auf der Kurve v entsprechen den in Figur 6 dargestellten Stellungen des Mitnehmerteils 310 entlang des Kreises A. Gemäß den im Kontext der Figur 6 beschriebenen Kinematik ist die Bahngeschwindigkeit der des Punktes E, die sich auch auf beispielsweise ein Sägeblatt überträgt, in Punkt A4, also bei der maximalen zum Gehäuse hin gerichteten Bewegung der Spindel 400, maximal, während sie in den Punkten A1 und A2, also den Umkehrpunkten der Spindel 112, entsprechend den Stellungen L' und L‴ des Pendelelementes 400, minimal ist. In Punkt A3, entsprechend der maximalen aus dem Gehäuse heraus gerichteten Geschwindigkeit der Spindel 112, erreicht die Kurve v einen Wert, der in der vorliegenden Ausführungsform der Erfindung 42% unterhalb des in Punkt A4 erreichten Wertes liegt.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Säbelsäge (100), umfassend ein Gehäuse (110), einen Antriebsmotor (200) mit einer Abtriebswelle (210), eine Spindel (112) zur Aufnahme und zum Antrieb eines Werkzeugs (113), insbesondere eines Sägeblattes, und einen Bewegungswandler zur Umwandlung einer Drehbewegung der Abtriebswelle (210) in eine Hin- und Herbewegung der Spindel (112); wobei der Bewegungswandler ein von der Abtriebswelle (210) rotatorisch um eine Drehachse (220) angetriebenes Exzenterelement (300) mit einem exzentrisch zur Drehachse (220) angeordneten Mitnehmerteil (310) aufweist, und ein Pendelelement (400) welches schwenkbar um einem Lagerpunkt (P) gelagert und über einen Koppelpunkt (114) mit der Spindel (112) verbunden ist; wobei das Pendelelement (400) ein Führungselement (430) zur Führung des Mitnehmerteils (310) aufweist; wobei das Führungselement (430) zwischen dem Lagerpunkt (P) und dem Koppelpunkt (114) angeordnet ist, **dadurch gekennzeichnet, dass** der Lagerpunkt (P) und der Koppelpunkt (114) eine erste Achse des Pendelelements (400) definieren; wobei das Führungselement (430) eine entlang der ersten Achse des Pendelelements (400) gerichtete Bewegungskomponente des Mitnehmerteils (310) relativ zu dem Pendelelement (400) zulässt und eine senkrecht zu der ersten Achse des Pendelelements (400) gerichtete Bewegungskomponente des Mitnehmerteils (310) relativ zu dem Pendelelement (400) weitestgehend verhindert.

2. Säbelsäge (100) nach Anspruch 1, **dadurch gekennzeichnet, dass** das Führungselement (430) eine Aufnahme in dem Pendelelement (400) bildet, in welche das Mitnehmerteil (310) eingreift.

3. Säbelsäge (100) nach einem der vorhergehenden Ansprüche, **dadurch gekennzeichnet, dass** die Aufnahme ein Langloch ist, wobei das Langloch im Wesentlichen entlang der ersten Achse des Pendelelements (400) ausgerichtet ist.

4. Säbelsäge (100) nach einem der vorhergehenden Ansprüche, **dadurch gekennzeichnet, dass** ein erster Abstand (e1) des Führungselements (430) zum Lagerpunkt (P) und ein zweiter Abstand (e2) des Koppelpunkts (114) zum Lagerpunkt (P) derart aufeinander abgestimmt sind, dass die Hin- und Herbewegung des Pendelelements (400) am Führungselement (430) eine erste Amplitude (Amp1) aufweist und am Koppelpunkt (114) eine zweite Amplitude (Amp2), wobei ein Amplitudenverhältnis (R) der zweiten Amplitude (Amp2) zur ersten Amplitude (Amp1) einen Wert ungleich 1 hat.

5. Säbelsäge (100) nach Anspruch 4, **dadurch gekennzeichnet, dass** das Amplitudenverhältnis (R) einen Wert R>1 hat, insbesondere einen Wert R>1.5, besonders bevorzugt einen Wert R>2.

6. Säbelsäge (100) nach einem der vorhergehenden Ansprüche, **dadurch gekennzeichnet, dass** der Lagerpunkt (P) in jeder Stellung der Spindel (112) zumindest einen Abstand Δ senkrecht zu einer Längsachse der Spindel (112) hat, wobei der Abstand Δ einen festgelegten Wert größer Null hat.

7. Säbelsäge (100) nach einem der vorhergehenden Ansprüche, **dadurch gekennzeichnet, dass** die Drehachse (220) senkrecht zur Abtriebswelle liegt und wobei das Exzenterelement (300) über einen Schneckentriebe von der Abtriebswelle (210) angetrieben wird.

8. Säbelsäge (100) nach einem der vorhergehenden Ansprüche, **dadurch gekennzeichnet, dass** die Spindel (112) mittels eines Nadellagers (118) an dem Gehäuse (110) gelagert ist, wobei das Nadellager (118) eine quer zu einer Längsachse der Spindel (112) gerichtete Bewegungskomponente der Spindel (112) relativ zum Gehäuse (110) verhindert.

9. Säbelsäge (100) nach einem der Ansprüche 4 und 8, **dadurch gekennzeichnet, dass** ein dritter Abstand (e3) zwischen dem Nadellager und dem Koppelpunkt (P) entlang der Längsachse der Spindel (112) so gewählt ist, dass die Hin- und Herbewegung der Spindel (112) von einer Kippbewegung der Längsachse der Spindel (112) um das Nadellager überlagert wird, sodass sich eine Orbitalbewegung des Werkzeugs (113), an der Spitze (115) des Werkzeugs (113), einstellt.

10. Säbelsäge (100) nach einem der vorhergehenden Ansprüche, **dadurch gekennzeichnet, dass** an dem Mitnehmerteil (310) ein exzentrisches Gegengewicht (312) zur Kompensation einer Unwucht des Exzenterelements (300) angeordnet ist.

## Claims

1. Reciprocating saw (100) comprising a housing (110), a drive motor (200) with an output shaft (210), a spindle (112) for receiving and driving a tool (113), in particular a saw blade, and a motion converter for converting a rotational movement of the output shaft (210) into a reciprocating movement of the spindle (112); wherein the motion converter comprises an eccentric element (300) which is driven by the output shaft (210) so as to rotate about a rotation axis (220) and has an entrainment part (310) disposed eccentrically to the rotation axis (220), and an oscillating element (400) which is mounted so as to be pivotable about a bearing point (P) and by way of a coupling point (114) is connected to the spindle (112); wherein the oscillating element (400) has a guide element (430) for guiding the entrainment part(310); wherein the guide element (430) is disposed between the bearing point (P) and the coupling point (114), **characterized in that** the bearing point (P) and the coupling point (114) define a first axis of the oscillating element (400); wherein the guide element (430) permits a movement component of the entrainment part (310) directed along the first axis of the oscillating element (400) relative to the oscillating element (400), and largely prevents a movement component of the entrainment part (310) directed perpendicularly to the first axis of the oscillating element (400) relative to the oscillating element (400).

2. Reciprocating saw (100) according to Claim 1, **characterized in that** the guide element (430) forms a receptacle in the oscillating element (400) in which the entrainment part (310) engages.

3. Reciprocating saw (100) according to one of the preceding claims, **characterized in that** the receptacle is a slotted hole, wherein the slotted hole is substantially aligned along the first axis of the oscillating element (400).

4. Reciprocating saw (100) according to one of the preceding claims, **characterized in that** a first spacing (e1) of the guide element (430) from the bearing point (P) and a second spacing (e2) of the coupling point (114) from the bearing point (P) are mutually adapted in such a manner, that the reciprocating movement of the oscillating element (400) on the guide element (430) has a first amplitude (Amp1) and on the coupling point (114) has a second amplitude (Amp2), wherein an amplitude ratio (R) of the second amplitude (Amp2) to the first amplitude (Amp1) has a value not equal to 1.

5. Reciprocating saw (100) according to Claim 4, **characterized in that** the amplitude ratio (R) has a value R>1, in particular a value R>1.5, particularly preferably a value R>2.

6. Reciprocating saw (100) according to one of the preceding claims, **characterized in that** the bearing point (P) in each position of the spindle (112) has at least a spacing Δ perpendicular to a longitudinal axis of the spindle (112), wherein the spacing Δ has a fixed value greater than zero.

7. Reciprocating saw (100) according to one of the preceding claims, **characterized in that** the rotation axis (220) is perpendicular to the output shaft, and wherein the eccentric element (300) is driven by the output shaft (210) by way of a worm drive.

8. Reciprocating saw (100) according to one of the preceding claims, **characterized in that** the spindle (112) by means of a needle bearing (118) is mounted on the housing (110), wherein the needle bearing (118) prevents a movement component of the spindle (112), which is directed transversely to a longitudinal axis of the spindle (112), relative to the housing (110).

9. Reciprocating saw (100) according to one of Claims 4 and 8, **characterized in that** a third spacing (e3) between the needle bearing and the coupling point (P) along the longitudinal axis of the spindle (112) is chosen in such a way, that the reciprocating movement of the spindle (112) is superimposed by a tilting movement of the longitudinal axis of the spindle (112) about the needle bearing, so that an orbital movement of the tool (113) at the tip (115) of the tool (113) is established.

10. Reciprocating saw (100) according to one of the preceding claims, **characterized in that** an eccentric counterweight (312) is disposed on the entrainment part (310) to compensate for an imbalance of the eccentric element (300).

## Revendications

1. Scie sabre (100), comprenant un boîtier (110), un moteur d'entraînement (200) avec un arbre de sortie (210), une broche (112) pour recevoir et entraîner un outil (113), notamment une lame de scie, et un convertisseur de mouvement pour transformer un mouvement de rotation de l'arbre de sortie (210) en un mouvement de va-et-vient de la broche (112) ; le convertisseur de mouvement présentant un élément excentrique (300) entraîné en rotation par l'arbre de sortie (210) autour d'un axe de rotation (220), avec une partie d'entraînement (310) agencée de manière excentrée par rapport à l'axe de rotation (220), et un élément pendulaire (400) qui est monté pivotant autour d'un point d'appui (P) et est relié à la broche (112) par l'intermédiaire d'un point d'accouplement (114) ; l'élément pendulaire (400) présentant un élément de guidage (430) pour guider la partie d'entraînement (310) ; l'élément de guidage (430) étant agencé entre le point d'appui (P) et le point d'accouplement (114), **caractérisée en ce que** le point d'appui (P) et le point d'accouplement (114) définissent un premier axe de l'élément pendulaire (400) ; l'élément de guidage (430) permettant une composante de mouvement de la partie d'entraînement (310) par rapport à l'élément pendulaire (400) dirigée le long du premier axe de l'élément pendulaire (400) et empêchant autant que possible une composante de mouvement de la partie d'entraînement (310) par rapport à l'élément pendulaire (400) dirigée perpendiculairement au premier axe de l'élément pendulaire (400).

2. Scie sabre (100) selon la revendication 1, **caractérisée en ce que** l'élément de guidage (430) forme un logement dans l'élément pendulaire (400) dans lequel s'engage la partie d'entraînement (310).

3. Scie sabre (100) selon l'une des revendications précédentes, **caractérisée en ce que** le logement est un trou oblong, le trou oblong étant dirigé essentiellement le long du premier axe de l'élément pendulaire (400).

4. Scie sabre (100) selon l'une quelconque des revendications précédentes, **caractérisée en ce qu'**une première distance (e1) de l'élément de guidage (430) au point d'appui (P) et une deuxième distance (e2) du point d'accouplement (114) au point d'appui (P) sont adaptées l'une à l'autre de telle sorte que le mouvement de va-et-vient de l'élément pendulaire (400) présente une première amplitude (Amp1) au niveau de l'élément de guidage (430) et une deuxième amplitude (Amp2) au niveau du point d'accouplement (114), un rapport d'amplitude (R) de la deuxième amplitude (Amp2) à la première amplitude (Amp1) ayant une valeur différente de 1.

5. Scie sabre (100) selon la revendication 4, **caractérisée en ce que** le rapport d'amplitude (R) a une valeur R>1, notamment une valeur R>1,5, de manière particulièrement préférée une valeur R>2.

6. Scie sabre (100) selon l'une quelconque des revendications précédentes, **caractérisée en ce que** le point d'appui (P) a, dans chaque position de la broche (112), au moins une distance Δ perpendiculaire à un axe longitudinal de la broche (112), la distance Δ ayant une valeur fixe supérieure à zéro.

7. Scie sabre (100) selon l'une quelconque des revendications précédentes, **caractérisée en ce que** l'axe de rotation (220) est perpendiculaire à l'arbre de sortie et dans laquelle l'élément excentrique (300) est entraîné par l'arbre de sortie (210) par l'intermédiaire d'un mécanisme à vis sans fin.

8. Scie sabre (100) selon l'une quelconque des revendications précédentes, **caractérisée en ce que** la broche (112) est montée sur le boîtier (110) au moyen d'un roulement à aiguilles (118), le roulement à aiguilles (118) empêchant une composante de mouvement de la broche (112) par rapport au boîtier (110) dirigée transversalement à un axe longitudinal de la broche (112).

9. Scie sabre (100) selon l'une quelconque des revendications 4 et 8, **caractérisée en ce qu'**une troisième distance (e3) entre le roulement à aiguilles et le point d'accouplement (P) le long de l'axe longitudinal de la broche (112) est choisie de telle sorte que le mouvement de va-et-vient de la broche (112) est superposé à un mouvement de basculement de l'axe longitudinal de la broche (112) autour du roulement à aiguilles, de telle sorte qu'un mouvement orbital de l'outil (113) s'établit à la pointe (115) de l'outil (113).

10. Scie sabre (100) selon l'une quelconque des revendications précédentes, **caractérisée en ce qu'**un contrepoids excentrique (312) est agencé sur la partie d'entraînement (310) pour compenser un déséquilibre de l'élément excentrique (300).
